# EUROPEAN PATENT APPLICATION

(11) **EP 1 204 038 A2**
(43) Date of publication of application: **08.05.2002**
(21) Application number: 01308351.4
(22) Date of filing: 28.09.2001
(51) Int. Cl.: G06F 17/30, G06F 17/60

(54) **Electronic document storage system**

(30) Priority: 30.09.2000 GB 0024000
(71) Applicant: Pace Micro Technology PLC, Saltaire, Shipley, BD18 3LF (GB)
(72) Inventor: Entwistle, Paul, Bramley, Hants RG26 5AG (GB)
(74) Representative: Wood, Graham

(57) **Abstract**

The present invention relates to a method and system for selecting the particular location for the storage of e-mails or other electronic documents in a storage means. Conventionally electronic documents are stored in a manner which allows the same to be identified and retrieved from a multilayered, or hierarchical storage structure. The present invention allows the electronic documents to be stored in a selected location with the selection being made by comparison of predefined attributes of the storage location with attributes of the document. Weighting values can also be allocated to the locations and the attributes and weighting values can be revised following the receipt and storage of a document.

## Description

The present invention which is the subject of this application relates to a method and system for sorting and filing e-mails or other electronic documents.

Typically, electronic documents need to be filed in a system memory such as that of a Personal Computer, in a manner which allows the same to be identified and retrieved. Conventionally a multilayered, or hierarchical storage structure is used.

However, with a complex hierarchical filing structure it can be time consuming to traverse, scroll and attempt to find the appropriate file folder for the electronic document. Currently, two facilities assist this process in that the navigated structure can be partially expanded, and/or a history of most recently accessed folders is available.

However, with disparate sources of electronic documents coming in to the system, the history is only partially valuable, while the expanded hierarchical structure effectively just flattens the structure while requiring substantial scrolling through the structure by the user.

Thus, while both facilities may be of limited use, they can still entail a significant amount of time being required to be spent by the user when trying to file or retrieve an electronic document.

The aim of this invention is to provide an analysis of an electronic document attribute or attributes such as the header, audience, sender and/or content and therefore provide a suggested location or locations in the storage system in which to file it.

In a first aspect of the invention there is provided a method of storage and/or filing of electronic documents wherein said method includes the compilation of a list of possible filing locations within a document storage system, assessing each location and allocating a weighting value to each location with respect to other locations and in relation to specified attributes of each of the locations and, upon receipt of an electronic document, assessing at least one attribute of the document and, with reference to the attributes and weighted values of the selectable locations for storage, selecting to locate said electronic document in at least one of the storage locations.

Typically, for each incoming document, a correlation is made against a database representative of the filing properties of the storage locations of the filing system which is being used to store those documents.

Preferably, a certain number, say 5-10, of the best correlations can be presented, such that if a correlation is matched for an incoming document, that document can be stored in a storage location automatically or by instant selection without the need to traverse or descend into the filing hierarchy. Thus, considerable savings in time and a reduction of the frustration caused to the user is achieved by this invention.

If, upon analysis of an incoming document, a matching correlation is not identified such that none of the "shortcut" storage locations are relevant, then the document can be stored in a storage location using the conventional method of document filing.

Typically, as new documents are added into the filing system, the database of filing properties used for the correlation and analysis is adapted to reflect the documents received in order to ensure statistically significant correlating features are used at all times.

In this manner the method and system is highly adaptive such that regular assessment of the statistical significance of the attributes of the locations is performed and the relevance of the same is adjusted for the associated databases respectively as required. Typically therefore, in practice, as new e-mails arrive to the system the attribute analysis continues to re evaluate the statistical significance of the folder locations into which the e-mails can be filed. By performing this on going analysis so the relevance of the system is maintained to the use at any instant of usage.

Typically the attributes of the document which are assessed can be set by the system and/or user and some attributes which it is submitted can be usefully assessed are any or any combination of the following; document Sender's name, Senders company, Target audience, Header text match against folder titles, core text correlation against folder titles, Keyword extraction from filed document, and/or Header text correlations against filed documents. However this list is not intended to be exhaustive and should not be interpreted as limiting the parameters which can be selected.

Clearly some attributes are more easily assessed and detected than others. Furthermore in the analysis of certain attributes some level of statistical significance can be attached to the results so that they are meaningful. For example; a high correlation of the word "the" might occur, yet it would not be a statistically significant differentiator among the file folders.

This is why a companion database associated with the file structure is preferred. This would hold, for example, statistically differentiating key words associated with a particular folder and only these keywords would be used to correlate against the e-mail to be filed. Thus affording a reduction in computational effort over systems that would otherwise have to perform detailed correlations against the actual folder contents as each new item arrives.

In a further aspect of the invention there is provided an e-mail reception and storage system, said system comprising a series of storage locations, each provided to receive selected e-mails and characterised in that the selection of a particular storage location for a received e-mail is made by assessing each location and allocating a weighting value to each location with respect to other locations and in relation to specified attributes of each of the locations and, upon receipt of the e-mail, assessing at least one attribute of the e-mail and, with reference to the weighted values of the storage locations for storage, selecting to locate said e-mail in at least one of the storage locations.

If required the received e-mail can be selected to be stored in more than one storage location.

In a preferred embodiment the weighting values and/or attributes are reviewed and if necessary revised as new e-mails are received and stored.

In one embodiment the attributes and weighting values are stored in a companion database with which the attributes of the received e-mail are compared rather than the actual content of each of the storage locations.

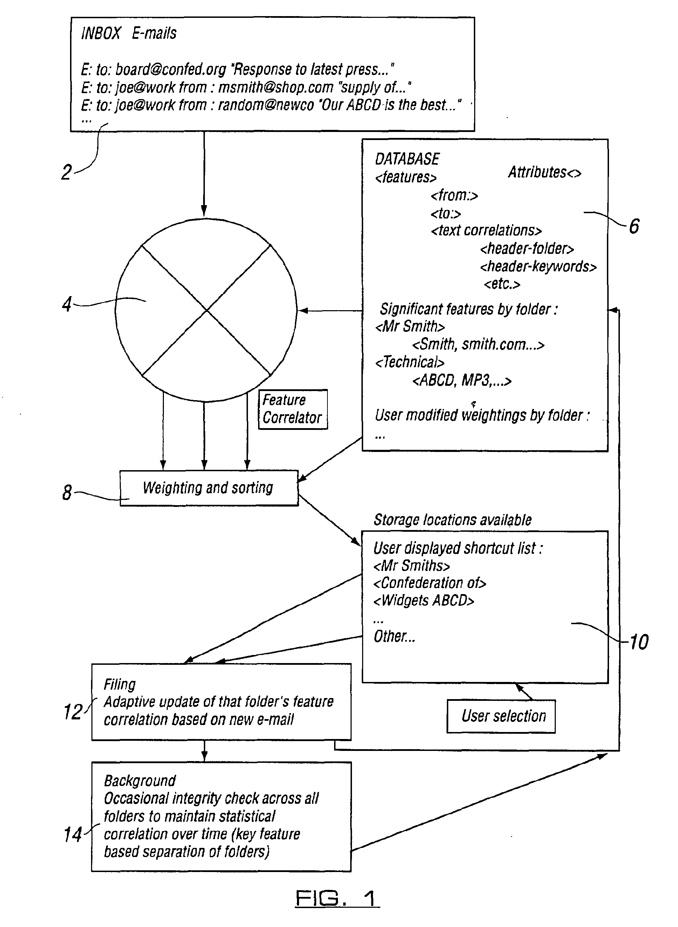

A specific example of the invention is now described with reference to Figure 1 which illustrates in schematic fashion, an electronic document filing system, in this case an e-mail filing system, in accordance with one embodiment of the invention.

In this case two general storage locations are available, a first relates to the attribute of companies and the second relates to the attribute "technical". Each of the storage locations is split into a series of folders, each having an identified attribute within that storage location such as, in the case of the "companies" storage location, "retailers", "financial" and "government". Each of these may have further folders as indicated.
Storage location 1 -Companies *
   Folder (i)-Retailers*
      Sub-folder - Mr Smiths Shop*
         e-mail:"blah,blah"from smith@myshop.com...
         e:mail ...
      Sub folder- Confederation of retailers
         e:mail "Meeting 27^{th}..." to : board@confed.org
         e:mail ...
   Folder (ii)Financial
   Folder(iii) Government
Storage location 2-Technical
   Folder (i)-Distribution
      e-mail Latest shipping uses ABCD technology
      e-mail: Company X designs ABCD widget
      e-mail: re: Company X designs ABCD widget

Thus with the relevant attributes identified within the database for which the analysis of incoming documents is to occur, then in this example, the method for analysis of incoming documents identifies a high statistically significant correlation of the term <from : > as the address of any incoming e-mails.

Thus with the storage locations and folders therein identified, in one example and using the correlation string "Companies\Retailers\Mr Smiths Shop" in accordance with the entries marked by an asterisk above to identify the particular storage location, an e-mail identified as <from xxx@smithshop.co.uk> is received. Thus this identity is compared to the correlation string Companies\ Retailers\Mr Smiths Shop and with the high correlation between the same the e-mail is identified and routed quickly to the folder storage location for those e-mails relating to Mr Smiths shop.

Similarly, replies to and messages sent to an organisation or person can be stored in accordance with the invention. For example and e-mail addressed <to :> board@confed.org would correlate closely to the correlation string used to represent the storage location folder indicated by "Companies\ Retailers\Confederation of retailers" folder and be stored therein.

Furthermore, if a significant number of e-mails with the same source address are already filed within a particular storage location folder, then that particular location can be noted as a significant attribute for that folder and stored within the database for subsequent use by the correlator.

With respect to the "Technical" storage location the keywords, "Company X" and "ABCD" can be extracted from the headers of the e-mails in the storage location folder "Technical\Distribution" and stored within the correlation database.

Typically, as the storage location system grows in complexity and the diversity of the content filed increases, the adaptive value of the system will become more apparent.

In one enhancement of the system, a degree of user "bias" can be specified for a storage location folder if desired. For example, even though a high degree of correlation may be attributable to say an e-mail address and a particular storage location, a specific keyword may be more important. Thus, in one example, if a user receives a relatively large number of e-mails from company X relating to a technology Y, but rather than file the e-mails in a folder relating to the Company X they wish to file the same in the folder relating to the technology Y so the user will specify to the system that reference to Technology Y takes precedence over the reference to Company X when allocating the storage location so that the e-mail is stored in the storage location relating to technology Y.

The accompanying Figure provides one arrangement of the invention in schematic fashion and refers to the example described previously.

In accordance with the system in this example, there is provided an e-mail inbox 2 in which there are stored three e-mails as indicated by "E:". This information is passed into a feature or attribute correlator 4 held in a companion database which includes the predefined attributes for the correlator set by the system and/or user and are indicated by reference numeral 6. When the correlation between the predefined attributes and the attributes of the e-mails from the inbox is completed and the relevant correlations identified, the information is referred to a weighting and sorting processor 8 which includes data relating to the particular weighting of each predefined attribute with respect to the other predefined attributes.

At the same time the user can receive an indication 10 of those storage location files and folders which are provided as "shortcut" locations, these being the most preferred locations used for the storage of previous e-mails.

When the new e-mails have passed through the correlation and weighting process they can then be filed and stored 12, if appropriate, in one of the shortcut storage locations 10 or alternatively in the hierarchical storage system.

As new e-mails are stored, the folder's attributes can, if necessary be redefined in accordance with the features of the newly stored e-mail and those already received and stored therein. If the attributes are redefined these are sent to the companion database for updating of the same prior to the next e-mail being received.

It is also preferred that at time intervals the whole system is reviewed 14 to maintain statistical correlation of the attributes set and the weighting of the same in response to the documents which have been received and stored at that time. In this way thee is provided an e-mail allocation and storage system which operates automatically and importantly is updated at regular intervals to ensure that the attributes and weighting values allocated to the various storage locations are indicative of the users activities at that time and not based on some historic usage evaluation.

## Claims

1. A method of storage of electronic documents **characterised in that** said method includes the steps of the compilation of a list of possible storage locations for the documents within a document storage system, assessing each location and allocating a weighting value to each location with respect to other locations and in relation to specified attributes of each of the locations and, upon receipt of an electronic document, assessing at least one attribute of the document and, with reference to the attributes and weighted values of the selectable locations for storage, selecting to locate said electronic document in at least one of the storage locations.

2. A method according to claim 1 **characterised in that** for each incoming document, a correlation is made against a database representative of the filing properties of the storage location of the filing system which is being used to store the document.

3. A method according to claim 1 **characterised in that** a certain number of the storage locations with the strongest correlation values are presented for selection upon receipt of a document.

4. A method according to claim 3 **characterised in that** if a correlation is matched for an incoming document, that document is stored in the matching storage location automatically.

5. A method according to claim 3 **characterised in that** if, upon analysis of an incoming document, a matching correlation is not identified such that none of the presented storage locations are relevant, the incoming document is stored in a storage location using a conventional method of document filing.

6. A method according to claim 1 **characterised in that** as new documents are added into the filing system, the database of filing properties used for the correlation and analysis of storage locations is adapted to reflect the characteristics of the documents received.

7. A method according to claim 1 **characterised in that** the method used is adaptive to reflect the characteristics of received documents.

8. A method according to claim 7 **characterised in that** the storage location assessment occurs upon receipt of each new document.

9. A method according to claim 7 **characterised in that** the storage location assessment occurs at regular time intervals.

10. A method according to claim 1 **characterised in that** the attributes of the storage locations which are assessed are predefined by the system and/or the user.

11. A method according to claim 10 **characterised in that** statistical significance values are assigned to the selected attributes.

12. A method according to claim 1 **characterised in that** a companion database associated with the storage structure is provided, said database including statistically differentiating key words associated with particular storage locations and only these keywords are used in the correlation of the attributes of the incoming document and the available storage locations.

13. A method according to claim 12 **characterised in that** the correlation and selection of the storage location for the incoming document is made with respect to the information for the storage locations in the companion database rather than the actual contents of the documents stored in the storage locations.

14. A method according to claim1 **characterised in that** the electronic documents received are e-mails.

15. An e-mail reception and storage system, said system comprising a series of storage locations, each provided to receive selected e-mails and **characterised in that** the selection of a particular storage location for a received e-mail is made by assessing each location and allocating a weighting value to each location with respect to other locations and in relation to specified attributes of each of the locations and, upon receipt of the e-mail, assessing at least one attribute of the e-mail and, with reference to the weighted values of the storage locations for storage, selecting to locate said e-mail in at least one of the storage locations.

16. A system according to claim 15 **characterised in that** the received e-mail can be selected to be stored in more than one storage location.

17. A system according to claim 15 **characterised in that** the weighting values and/or attributes are reviewed and if necessary revised as new e-mails are received and stored.

18. A system according to claim 15 **characterised in that** the attributes and weighting values are stored in a companion database with which the attributes of the received e-mail is compared rather than the actual content of each of the storage locations.
